(19) Europäisches Patentamt
European Patent Office
Office européen des brevets

(11) **EP 2 119 938 A1**

(12) **EUROPEAN PATENT APPLICATION**

(43) Date of publication:
**18.11.2009 Bulletin 2009/47**

(51) Int Cl.:
**F16F 15/02** $^{(2006.01)}$ **F16F 7/10** $^{(2006.01)}$

(21) Application number: **08156276.1**

(22) Date of filing: **15.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Nederlandse Organisatie voor toegepast-natuurwetenschappelijk onderzoek TNO**
**2628 VK Delft (NL)**

(72) Inventors:
- **Fraanje, Petrus Rufus**
  **2623 EH Delft (NL)**
- **Rijnfeld, Niek**
  **2517 EL Den Haag (NL)**
- **Van den Dool, Teunis Cornelis**
  **2623 HH Delft (NL)**

(74) Representative: **Hatzmann, Martin**
**Vereenigde**
**Johan de Wittlaan 7**
**2517 JR Den Haag (NL)**

(54) **A vibration sensor and a system to isolate vibrations.**

(57) A vibration sensor (9) comprises a reference mass (10), a resilient element (11) supporting the reference mass (10), and a base (13) supporting the resilient element (11), and further comprises a displacement sensor (12) for determining the distance between the reference mass (10) and the base (13). In accordance with the invention the vibration sensor comprises an actuator (14) that is situated between the resilient element (11) and the base (13), a second displacement sensor (15), and a controller (16) for providing an output signal to the actuator (14).

Figure 3

EP 2 119 938 A1

Printed by Jouve, 75001 PARIS (FR)

**Description**

The present invention relates to a vibration sensor comprising a reference mass, a resilient element supporting the reference mass, and a base supporting the resilient element, and further comprising a displacement sensor for determining the distance between the reference mass and the base.

The present invention also relates to an active vibration isolation system to isolate vibrations by using a vibration sensor.

State of the art

The mechanical design of vibration sensors like seismometers, and the principle of active vibration control is well described in literature, see e.g. P.G. Nelson, "An active vibration isolation system for inertial reference and precision measurement", Rev. Sci. Instrum. 62 (9), September 1991, pp.2069-2075. Basically a seismometer, geophone or other type of vibration sensor comprises an reference mass (often called inertial mass) supported by a base, frame or housing. The reference mass is attached to the base by a resilient element, preferably a spring with a low stiffness. With such vibrations sensors it is not possible to measure vibrations below the resonance frequency. This resonance frequency that is determined by the stiffness and the damping factor of the spring and by the mass, is in practice not lower than 1 Hz. As a consequence it is not possible to measure vibrations with a frequency well below this value. In addition to the mass and the spring, the vibration sensor comprises a displacement sensor for measuring the relative displacement of the vibrating base and the reference mass. It is a challenge for designers of vibration sensors to meet the demands concerning accuracy, sensibility and compactness.

Basically all active vibration isolation system comprise a vibration sensor and an actuator to move the payload that has to be isolated from vibrations. The displacement sensor can be placed on the payload or on the source of the disturbing vibrations, usually the floor. The output signal of the sensor is used to adjust the position of the payload with respect to the floor. The state of the art can found in US 2007/0223314 A1 that discloses a geophone with mass position sensing. A disadvantage of this known geophone and other vibration sensors based on the same principle is that the lower limit of the frequencies that can be detected is limited by the mechanical properties of the spring and the mass. To obtain the lowest possible limit special attention is paid to the design of the spring supporting the reference mass. In particular the stiffness is chosen as low as possible.

WO2005/073592 A1 discloses a system for active vibration isolation that differs from the most common approach described above. In this known arrangement a reference mass that is much less than the mass of the payload is mounted on an actuator. The payload is mounted on this small mass by a spring. This known arrangement comprises two displacement sensors instead of one. The first displacement sensor measures the displacement between the payload and the base on which the actuator is placed. The second sensor measures the distance between the small mass and the payload. A controller receiving the output signals of both displacement sensors controls the movement of the actuator. The function of the displacement sensors is to isolate the payload from earth vibrations. This known arrangement does not contain a vibration detection part that can be used separately from the complete system. In addition, this system is sensitive to vibrations originating from the payload itself, i.e. equipment containing moving parts or persons handling the equipment.

It is the objective of the present invention to provide a vibration sensor that measures the vibrations of the base on which the sensor is mounted accurately, also at low frequencies. Such a vibration sensor can be used in for example a seismometer or geophone to measure seismic activity or other earth vibration, or to measure vibrations in civil structures like buildings and bridges. The vibration sensor is also suited for measuring variations in the earth gravity.

It is another objective of the present invention to provide an active vibration isolation system by using a vibration sensor. Such systems are used in, among others, optical tables, equipment for lithography, atomic force microscopy and scanning tunnelling microscopy. In addition the vibration sensor is suited for vibration isolation in for instance vehicles and cameras.

The first objective of the invention is obtained by a vibration sensor according to the invention **characterised in that** the vibration sensor further comprises an actuator that is situated between the resilient element and the base, a second displacement sensor, and a controller for providing an output signal to the actuator. In this vibration sensor the controller reduces the stiffness of the system (comprising mass, spring, and actuator) considerably. This reduction of the stiffness allows detection of vibrations with lower frequencies than without such a controlled actuator. Many types of displacement sensors can be used, although it is preferred to use sensors that measure an absolute length or distance. However, also velocity or accelerations sensors satisfy. In principle it is also possible to place a force actuator between the base and the mass, viz. in parallel with the spring, to reduce the stiffness. However, the stiffness can be reduced in a better and more accurate way by placing a position actuator in series between the base and the spring. It is an advantage of the vibration sensor according to the invention that it can be constructed in a compact way; the mass needs not to be large to obtain a low resonance frequency. Actually, the vibration sensor of the invention can be realised in a compact construction.

The second objective is obtained by using the vibration sensor according to the invention in an active vibration isolation system. The reference mass of the vibration sensor used in active vibration systems is small in comparison to the mass of the platform that has to be isolated, typically a reference mass is 0.1 kg. To obtain a resonance frequency of 0.1 Hz, the stiffness of a mechanical spring needs to be 0.003 N/m. For such a low stiffness, gravity force would result in an elongation of the spring of more than 200 meters. Special type of springs (such as constant force springs) may be used to achieve a lower stiffness without significant elongation. However, resonance frequencies well below the 1 Hz that are compact as well are difficult to achieve using mechanical springs. It is well known that for the feedback of the signal supplied by the displacement sensor to the actuator, common PID control can be used. Noise, parasitic effects and actuator nonlinearities, however, prevent effective vibration isolation below 0.5 Hz in practice. The best performance claimed until now seems to be a resonance frequency of 0.2 Hz in a system where the actuator and the sensor are located substantially close to each other. Using the vibration sensor according to the invention allows a good vibration isolation below this value with a relatively simple construction.

Brief description of the figures

Figure 1 shows a vibration sensor according to the state of the art
Figure 2 shows an active vibration system according to the state of the art
Figure 3 shows schematically the vibration sensor according to the invention
Figure 4 shows a block diagram of the vibration sensor including the controller.
Figure 5 shows the magnitude and phase of the loop gain.
Figure 6 shows the resulting isolation of the sensors reference mass with regard to. (ground) vibrations.
Figure 7 shows schematically how the vibration sensor of the present invention can be integrated in an active vibration isolation system

Detailed description of the figures.

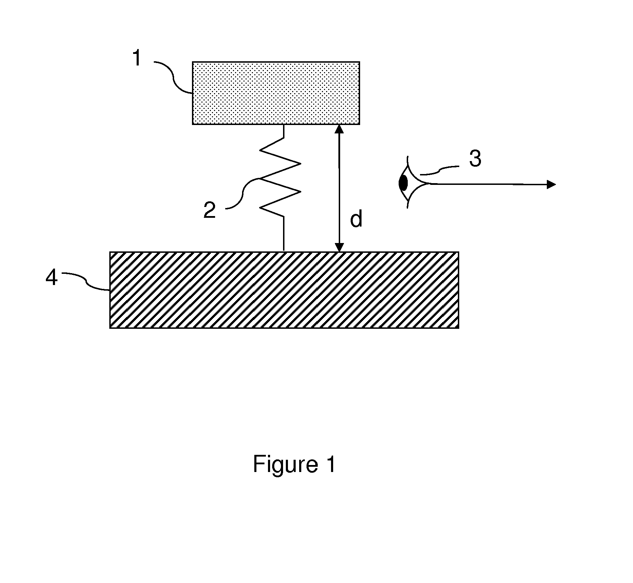

Figure 1 shows a vibration sensor or seismometer according to the state of the art. A reference mass (1) is supported by a spring (2) that is mounted on a base (4). The vibration of the base with respect to the reference mass is measured by a displacement sensor (3) that measures any changes in distance d.

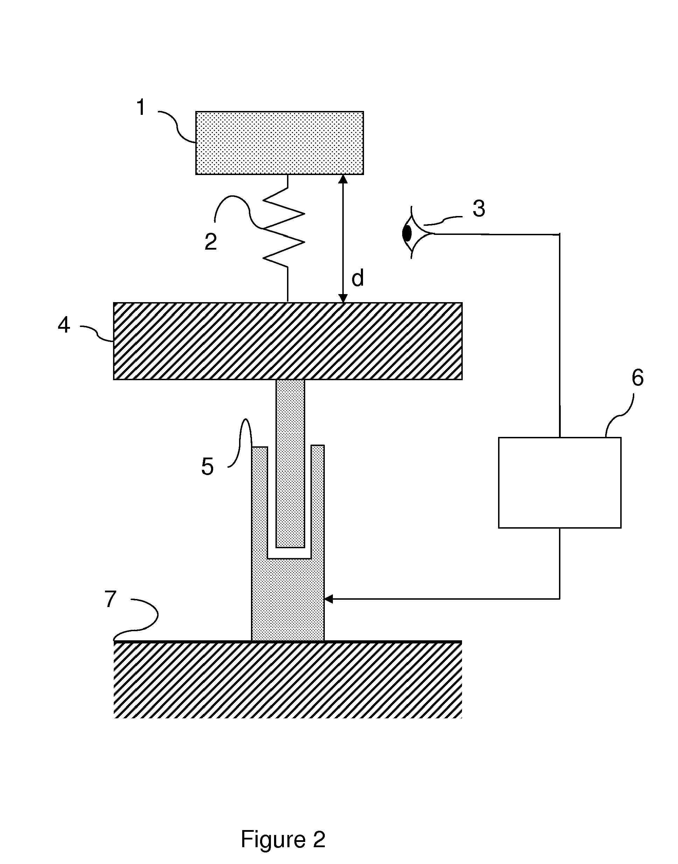

Figure 2 shows an active vibration isolation system according to the state of the art. A reference mass supported by a spring (2) is mounted on the payload (4) that has to be isolated from vibrations of the earth (7). A displacement sensor (3) provides a signal that is representative for the distance d between the reference mass and the payload, to a controller (6). The controller provides the actuator (5) with an input signal to move the payload (4) with respect to the vibrating earth in order to isolate the payload from these vibrations. The displacement sensor capable of detecting the undesired vibration can be placed either on the source of the vibration or on the platform or payload that has to be isolated from earth vibrations or other mechanical disturbances like acoustic vibrations. The platform is supported by springs or other bearings and it can be driven by an actuator like a servomotor along the sensitive axis of the sensor. The electronic output of the sensor is (filtered and) fed back to the actuator that compensates for the undesired vibration.

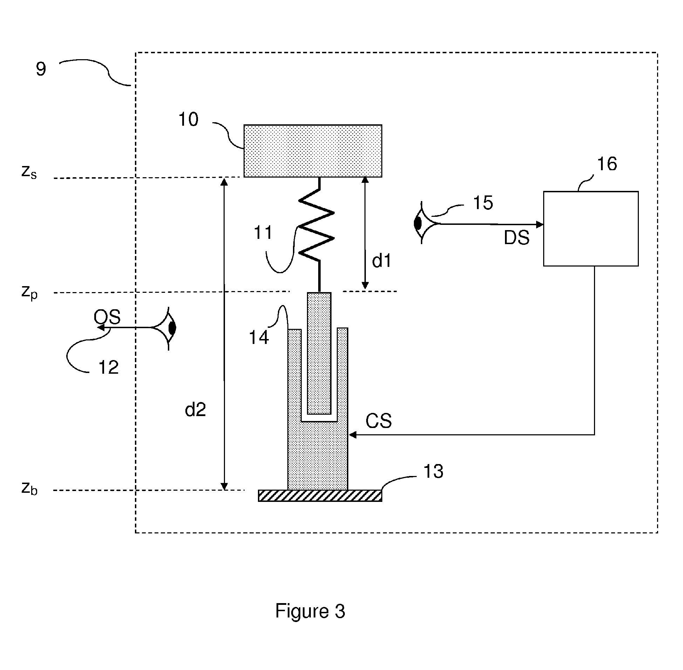

Figure 3 shows the vibration sensor according to the invention. The output signal of the vibration sensor is the output of a displacement sensor (12) which output is representative for the distance $d = z_b - z_s$ between a reference mass (10) and a base (13). The reference mass is supported by an actuator (14) via a resilient element (11). The resilient element can for instance be a mechanical spring or a piece of an elastomeric material. However, also resilient elements of a non-contact type like a Lorentz coil, a static magnetic field or pneumatic elevation can be used. Although the resilient element is represented by a spring in the figure, it is realised that in practice the mechanical impedance of a resilient element has both a dissipative (schematically represented by a damper) and a non-dissipative character (schematically represented by a spring).

The actuator is placed on or fixed to the base. This actuator can be a piezo-electric actuator e.g. of a piezoceramic type, a magnetostrictive motor, a Lorentz motor or any type of position actuator or motor. The distance (d1) between the position $z_s$ of the reference mass and the position $z_p$ of the actuator in the direction of the elongation axis, viz. the length of the spring is measured by a second displacement sensor (15). It is understood that the distance d1 can also be derived from the distance d2 and the length of the actuator d2-d1. Preferably, displacement sensors are used that measure an absolute distance or relative position, viz. $z_b - z_s$ and $z_s - z_p$. Examples of such sensors are an interferometer, a capacitor and an eddy-current type of sensor. However, it is also possible to use one or more velocity sensors or acceleration sensors. When velocity or acceleration sensors are used, the distances can be obtained by single or double integration of the output signal, respectively. The output signal of the second displacement sensor is sent to a controller (16). The controller might consist of a low pass filter, a lead filter, a lag filter and an amplifier in series. However, also other controllers as known to those skilled in the art can be used. The controller sends the appropriate signal to the position actuator allowing the actuator to expand or contract. Preferably the actuator is a piezo-electric actuator, but it is also possible the apply another type of motor like for example a linear servo or an electrostrictive actuator.

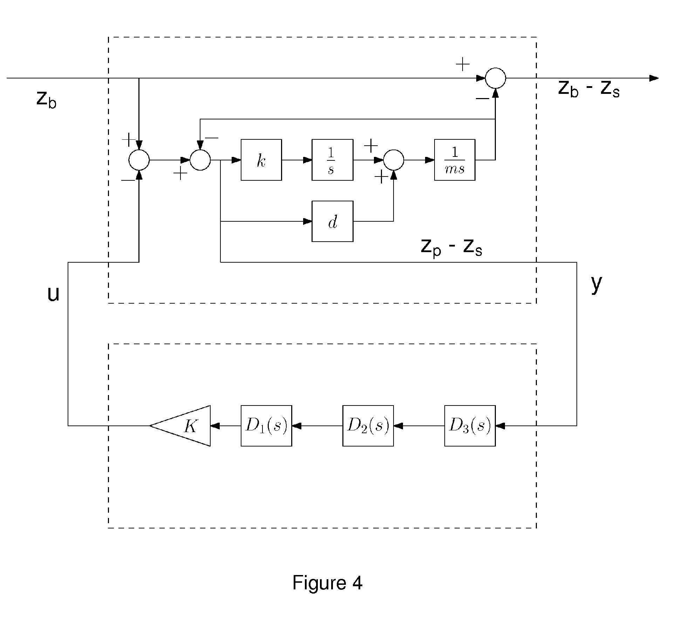

Figure 4 shows a block diagram of a transfer function of the mechanical part of the vibration sensor (upper part of the figure) and the transfer function of the controller (lower part of the figure). In this model based description, the mechanical part of the system consists of a mass (m), a spring with stiffness k, and a damper with damping factor d. The inputs to the mechanical system are the excitation of the base vibrations to a displacement of the base, $z_b$, as well as the actuator signal u. The outputs of the mechanical system are the distance between the reference mass and the base, $z_b$-$z_s$, i.e., the resulting vibration sensor signal, as well as the elongation of the spring and damper, i.e., the distance between the actuator and the reference mass, $z_p$-$z_s$. This signal is fed back via the controller.

The controller can be designed by (robust) model based control methods, such as e.g. LQG, $H_2$, $H_\infty$, mixed $H_2/H_\infty$, control or mu-synthesis or by pole-placement. However, standard loop-shaping techniques based on root-locus or bode plots suffice. Following the standard loop-shaping design philosophy, the controller might consist of a low pass filter D3, a lead filter D2, a lag filter D1 and an amplifier K in series. The function of the low-pass filter is to limit the bandwidth of the system and to prevent spill-over due to high frequent spurious resonances. The function of the lead filter is to increase the phase at the high frequency cross-over frequency which will increase the robustness as well as reduces the overshoot of the controlled system. Similarly, the function of the lag filter is to reduce the phase at the low frequency cross-over frequency, which also will increase the robustness and reduce the overshoot of the controlled system.

The principle of operation is discussed below in more detail to elucidate the way in which the stiffness is reduced by the vibration sensor according to the invention.

The equation of motion of the mass m is given by

$$ms^2 z_s \;=\; k(z_p - z_s + z_o) - mg \qquad\qquad (1)$$

where k the stiffness of the spring and $z_o = mg/k$ the steady-state position of the mass. The elongation of the piezo-actuator is given by

$$z_p - z_b \;=\; d_{31}\ell\frac{V}{d} \qquad\qquad (2)$$

where $d_{31}$ the strain coefficient [m/V], $\ell$ the length [m], $d$ the thickness [m], and V the voltage supplied over the piezo-actuator. The voltage V is controlled by feedback of $z_s$ - $z_p$, measured by a displacement sensor:

$$V \;=\; - C(z_p - z_s) \qquad\qquad (3)$$

where C is the controller gain. Substituting equation (3) in (2) and adding $z_b$ - $z_s$ on both sides yields

$$
\begin{aligned}
z_p - z_s \;&=\; (z_b - z_s) - d_{31}\frac{\ell}{d}C(z_p - z_s) \\
&=\; (1 + d_{31}\frac{\ell}{d}C)^{-1}(z_b - z_s)
\end{aligned}
\qquad\qquad (4)
$$

From this expression, it can be observed that the higher the controller gain C is, the smaller the elongation of the spring, viz. the distance $z_p$ - $z_s$. Filling in (3) and (4) into equation (2) yields the elongation $z_p$ - $z_b$ of the piezo-actuator in terms of $z_b$ - $z_s$

$$z_p - z_b = - \frac{d_{31}\frac{l}{d}C}{1 + d_{31}\frac{l}{d}C}(z_b - z_s) \tag{5}$$

Hence, for $C \to \infty$, it follows that for the elongation it holds that $z_p$ - $z_b$ = -$z_b$, i.e., the piezo-actuator perfectly compensates for the variation in the base position $z_b$.

To obtain the equation of motion of the mass m in terms of the base position $z_b$, equation (4) is filled in equation (1), which yields

$$ms^2 z_s = k(1 + d_{31}\frac{\ell}{d}C)^{-1}(z_b - z_s) + kz_o - mg \tag{6}$$

Hence, it is observed that the stiffness is scaled down by the factor $1 + d_{31}\frac{\ell}{d}C$.

It is an advantage of the vibration sensor according to the invention that the sensitivity of the sensor with regard to nonlinear behavior and variations due to for instance aging in the spring and damper is suppressed viz. scaled down by the controller.

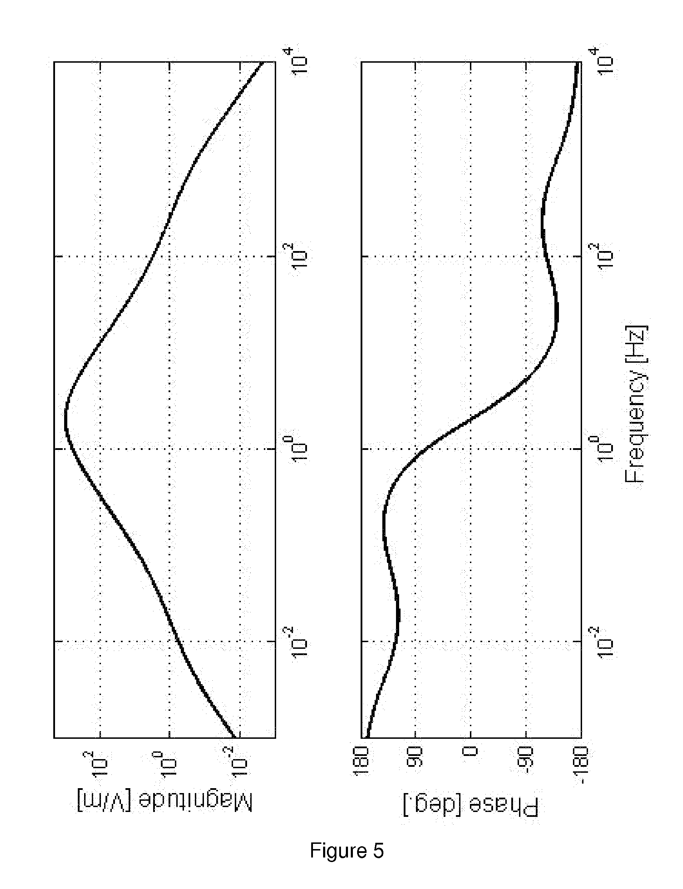

Figure 5 shows the magnitude and the phase of the loop-gain, i.e., the series connection of the mechanical part of the sensor and the controller, which determines the performance as well as the (robust) stability. The higher the magnitude of the loop-gain the better the reference mass is isolated from vibrations. The stability robustness is determined by the phase at the frequency where the gain-loop magnitude is equal to 1. For the example given here, these frequencies are 17 mHz and 240 Hz. More specifically, the phase between the low-frequency cross-over and the high frequency cross-over frequencies should stay well between +180° and -180°. To obtain good damping and good stability robustness we have chosen in this example phase margins on both sides of 60°, i.e., the phase stays between +120° and -120°, which is accomplished by lag and lead filters.

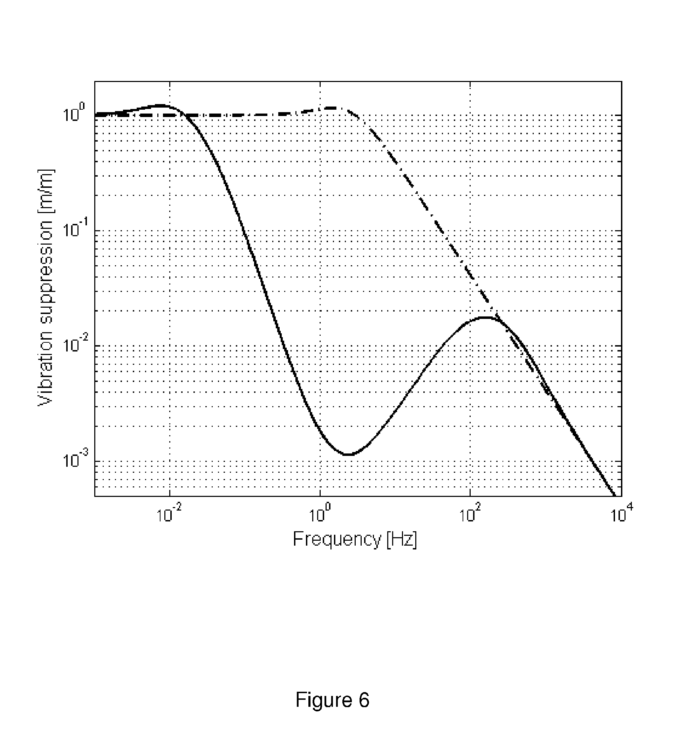

Figure 6 illustrates the performance of the open-loop (uncontrolled) system by the dashed curve and of the closed-loop (controlled) system by the solid curve. Because of the second-order roll-off of the controller above 2Hz, the performance above 2Hz is reducing again. The performance above 2Hz can be improved by using a first-order rather than a second-order roll-off, which will however increase the bandwidth. In fact the trade-off is between bandwidth and performance, viz. accuracy.

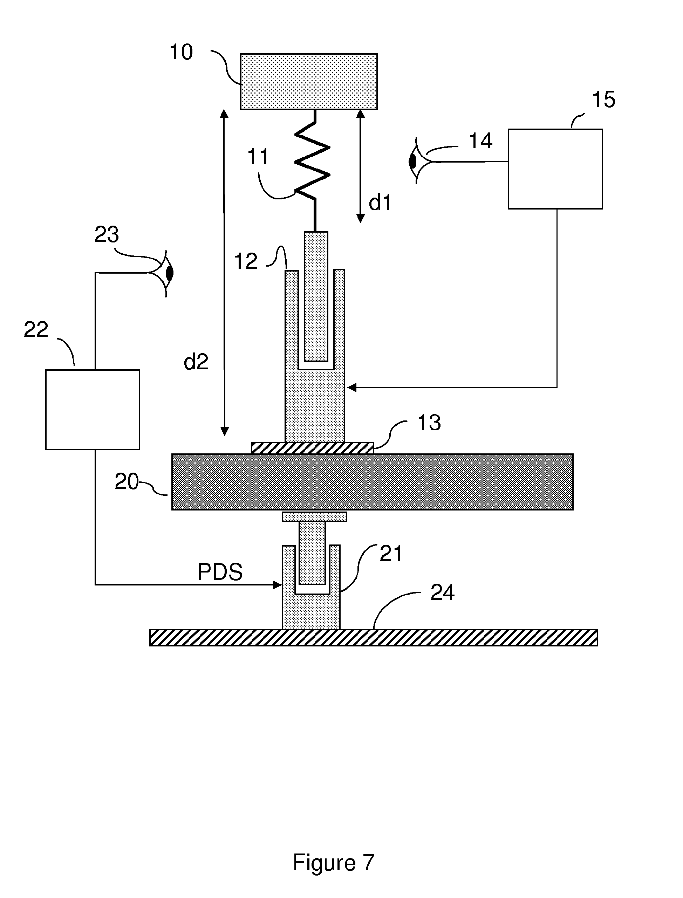

Figure 7 shows a preferred embodiment of the vibration isolation system with the vibration sensor according to the invention. The base of the vibration sensor is fixed on a payload (20) that is supported by a second actuator (21). The second actuator is placed on a floor (24) or any other bearing structure. A displacement sensor (23) measures the distance between the reference mass (10) and the payload (2). The output signal of the displacement sensor is sent to a second controller (22) that sends an appropriate signal to the second actuator allowing the actuator to expand or contract. Such an actuator can be a piezo-electric actuator, a Lorentz type of motor or any other lifting means including pneumatic means. In another embodiment the vibration sensor according to the invention is placed on the source of the vibrations being e.g. a frame or floor on which the payload is placed or the earth.

An example

For a vibration sensor with a reference mass of 0.5 kg and a spring with a spring constant k equal to 0.02N/mm (e.g. E0240-018-2750-M from SPEC Stock Precision Engineering Components, Associated Spring Raymond, Catalogue 2007, http://www.asraymond.com/spec/download.asp, page 69), the resonance frequency is 1 Hz.

Then, the elongation of the spring will be mg/k = g/40 = 0.25m, neglecting the pretension of the spring. To reduce the resonance frequency by a factor $\sqrt{1000}$, the stiffness has to be reduced by a factor 1000. Hence, following from (6), it should hold that $d_{31}\frac{\ell}{d}C \approx 1000.$ The piezo-ceramic actuator P-249.20 from Physik Instrumente (Miniature Open-Loop Piezo Actuators (HVPZT), http://www.physikinstrumente.com/en/products/prdetail.php?sortnr=100300) has an elongation of 10μm at 1000V, such that $d_{31}$ $\ell/d$ = 10 · 10$^{-9}$m/V. Hence, changes of 1V in the actuator voltage results in changes in the elongation of 10nm. Hence, the controller gain need to be 1000/10 · 10$^{-9}$ = 10$^{11}$ V/m. Hence, for every nm RMS variation in the distance $z_p$ - $z_s$ the actuator voltage will have an RMS value of 100V. The resolution of the steering electronics for this piezo-actuator that is supplied by PI is 0.1nm (in fact the piezo has an infinite resolution). The first resonance frequency of the piezo is at 18kHz, which is sufficiently high for the purpose of the vibration sensor.

The bandwidth of the controller needs to be limited to prevent excitation of high frequency parasitic resonances and saturation of the amplifier, without reducing the gain around 1Hz. This is accomplished by means of a second order low-pass filter with cut-off frequency at about 2Hz. Since the cross-over frequency, the highest frequency at which the magnitude of the loop-gain is 1, is at 240Hz, the resulting bandwidth of the closed loop system is less than 2x240=480Hz, and actually the bandwidth is 513Hz. Using a lag-filter at 17mHz with phase lag of 60 degree, i.e.,

$$D_1(s) = \frac{34.94s + 13.93}{34.94s + 1}$$

and a lead-filter at 240 Hz with phase lead of 60 degrees, i.e.,

$$D_2(s) = \frac{2.48 \cdot 10^{-3}s + 1}{1.78 \cdot 10^{-4} + 1} \qquad (7)$$

the phase margins are increased such that the robustness and damping are improved.
In Figure 5 the magnitude and the phase of the resulting loop-gain (i.e., the series connection of the plant and the controller) are shown.

The vibration sensor according to the invention and the use of this sensor in an active vibration isolation system has the advantage over other sensors and systems that the reference mass can be completely isolated from external disturbances, including acoustic vibrations. In addition, the sensor is as compliant as the internal noise sources and bandwidth of the controller allow. By measuring the relative position of the mass, instead of the absolute acceleration, vibrations of 1 μm at 1 Hz could be measured with an accuracy of 1 nm.

It is noted that any terms used in this document should not be construed so as to limit the scope of the present invention. In particular, the words "comprise(s)" and "comprising" are not meant to exclude any elements not specifically stated. Single (circuit) elements may be substituted with multiple (circuit) elements or with their equivalents.

It will be understood by those skilled in the art that the present invention is not limited to the embodiments illustrated above and that many modifications and additions may be made without departing from the scope of the invention as defined in the appending claims.

**Claims**

1. A vibration sensor (9) comprising a reference mass (10), a resilient element (11) supporting the reference mass (10), a base (13), and a first displacement sensor (12) for determining the distance (d2) between the reference mass (10) and the base (13) and for providing an ouput signal (OS) indicative of said distance (d2) **characterised in that** the vibration sensor (9) further comprises an actuator (14) situated between the resilient element (11) and the base (13), a second displacement sensor (15) for determining the length of the resilient element (11) and for producing a corresponding distance signal (DS), and a controller (16) for providing an output signal (CS) to the actuator (14) in response to the distance signal (DS).

2. A vibration sensor according to claim 1, **characterised in that** the second displacement sensor (15) is arranged for determining the distance (d1) between the reference mass (10) and the actuator (14).

3. A vibration sensor according to claim 1 or 2, **characterised in that** at least one of the displacement sensors (12,15) is a sensor for measuring an absolute distance.

4. A vibration sensor according to any of the preceding claims, **characterised in that** the actuator (14) is a piezo-electric actuator.

5. A vibration sensor according to any of the preceding claims, **characterised in that** the controller (16) comprises a low pass filter, a lead filter, a lag filter and an amplifier arranged in series.

6. A vibration sensor according to any of the preceding claims, **characterised in that** the resilient element (11) is a mechanical spring.

7. An active vibration isolation system comprising a vibration sensor (9) according to any of the preceding claims.

8. An active vibration isolation system according to claim 7 **characterised in that** the vibration sensor (9) is placed on a payload (20) that has to be isolated.

9. An active vibration isolation system according to claim 7 or 8 **characterised in that** the system further comprises a second actuator (21) for displacing a payload (20) relative to a bearing (24), and a second controller (22) for providing a payload displacement signal (PDS) to the second actuator (21).

Figure 1

Figure 2

Figure 3

Figure 4

Figure 5

Figure 6

Figure 7

**EUROPEAN SEARCH REPORT**

Europäisches Patentamt
European Patent Office
Office européen des brevets

Application Number

EP 08 15 6276

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | WO 2005/073592 A (KONINKL PHILIPS ELECTRONICS NV [NL]; WARMERDAM THOMAS P H [NL]; VERVOO) 11 August 2005 (2005-08-11) * abstract; figures * | 1-9 | INV. F16F15/02 F16F7/10 |
| A | US 5 823 307 A (SCHUBERT DALE W [US] ET AL) 20 October 1998 (1998-10-20) * abstract; figures * | 1-9 | |
| A | DE 296 12 349 U1 (HEILAND PETER [DE]) 20 November 1997 (1997-11-20) * abstract; figures * | 1-9 | |
| A | WO 02/18815 A (UNIV HANNOVER [DE]; HOFSCHULTE JENS [DE]; SCHERM NORBERT [DE]) 7 March 2002 (2002-03-07) * abstract; figures * | 1-9 | |
| A | US 6 193 206 B1 (YASUDA MASASHI [JP] ET AL) 27 February 2001 (2001-02-27) * abstract; figures * | 1-9 | |

TECHNICAL FIELDS SEARCHED (IPC)

F16F

The present search report has been drawn up for all claims

| Place of search | Date of completion of the search | Examiner |
|---|---|---|
| The Hague | 25 November 2008 | Kramer, Pieter Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 15 6276

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2008

| Patent document cited in search report | | Publication date | Patent family member(s) | | Publication date |
|---|---|---|---|---|---|
| WO 2005073592 | A | 11-08-2005 | CN | 1914436 A | 14-02-2007 |
| | | | JP | 2007522393 T | 09-08-2007 |
| | | | US | 2008237947 A1 | 02-10-2008 |
| US 5823307 | A | 20-10-1998 | BR | 9501432 A | 19-12-1995 |
| | | | CA | 2146200 A1 | 05-10-1995 |
| | | | DE | 69509819 D1 | 01-07-1999 |
| | | | DE | 69509819 T2 | 13-01-2000 |
| | | | EP | 0676558 A1 | 11-10-1995 |
| | | | IL | 112765 A | 10-03-1998 |
| | | | JP | 3729888 B2 | 21-12-2005 |
| | | | JP | 8054039 A | 27-02-1996 |
| | | | US | 5660255 A | 26-08-1997 |
| DE 29612349 | U1 | 20-11-1997 | NONE | | |
| WO 0218815 | A | 07-03-2002 | DE | 10043128 A1 | 28-03-2002 |
| | | | EP | 1409889 A1 | 21-04-2004 |
| | | | JP | 2004507689 T | 11-03-2004 |
| | | | US | 2004041316 A1 | 04-03-2004 |
| US 6193206 | B1 | 27-02-2001 | JP | 11230246 A | 27-08-1999 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070223314 A1

- WO 2005073592 A1

**Non-patent literature cited in the description**

- **P.G. Nelson.** An active vibration isolation system for inertial reference and precision measurement. *Rev. Sci. Instrum.,* September 1991, vol. 62 (9), 2069-2075